# EUROPEAN PATENT SPECIFICATION

(11) **EP 0 706 933 B1**
(45) Date of publication and mention of the grant of the patent: **11.08.1999**
(21) Application number: 95116131.4
(22) Date of filing: 12.10.1995
(51) Int. Cl.: B62J 1/12, B62J 1/26

(54) **Motorcycle seat**
Motorradsattel
Selle de motocyclette

(30) Priority: 13.10.1994 JP 27441794
(43) Date of publication of application: 17.04.1996
(73) Proprietor: YAMAHA HATSUDOKI KABUSHIKI KAISHA, Iwata-shi Shizuoka-ken, 438 (JP)
(72) Inventor: Tanigaki, Satoshi, c/o Yamaha Hatsudoki K. K., Iwata-shi, Shizuoka-ken, 438 (JP); Kurawaki, Ichiro, c/o Yamaha Hatsudoki K. K., Iwata-shi, Shizuoka-ken, 438 (JP)
(74) Representative: Grünecker, Kinkeldey, Stockmair & Schwanhäusser Anwaltssozietät

(56) References cited:
- FR-A- 2 367 650
- PATENT ABSTRACTS OF JAPAN vol. 7 no. 215 (M-244) ,22 September 1983 & JP-A-58 110225 (KASAI KOGYO KK) 30 June 1983,

## Description

The present invention relates to a motorcycle seat as defined in the preamble part of claim 1.

Usually, motorcycle seats are of a construction comprising a bottom plate of a hard planar shape made of metal or hard plastic, a stuffing cushion member made of expanded urethane or the like, and a seat skin made of synthetic leather or the like. In such a seat, the hardness or the amount of depression when a rider sits on the seat is changed by changing the thickness of the seat skin, material or density of the cushion stuffing member, etc.

The conventional motorcycle seat has the following problems: If the portion of the motorcycle seat subjected to high pressure by a rider sitting on it recedes too much and deforms, not only riding comfort is impaired but also appropriate riding attitude cannot be maintained. From this viewpoint, the seat has to be hard to some extent. However, if the seat is made hard the sitting comfort would be impaired.

Further from FR-A-2 367 650 a saddle for a bicycle is known which can also be used on a motorcycle. The prior art saddle comprises a holder portion as a bottom plate and at least two elastic cushions which can be either inflated or be made of rubber. These cushions are covered by a seat skin which is made of soft leather. The rider's weight is supported by said soft cushions.

Accordingly, it is an objective of the present invention to improve a motorcycle seat such that an appropriate riding attitude can be maintained assuring convenient manoeuvrability of the motorcycle while simultaneously assuring high riding comfort.

The aforeindicated objective achieved by a motorcycle seat comprising the features of claim 1. Accordingly the riders weight mainly rests on seat portions having a higher rigidity than other areas of the seat. Preferably, the portion of the seat which is subject to a high seating pressure produced by the rider is adapted to be harder than other areas of a seat surface.

Preferably, this is obtained by either making the seat skin partially thick and/or by partially changing the seat skin material and/or by partially padding the high pressure area of the backside of the seat skin introducing an impact absorbing member under the seat skin and/or by bonding the seat skin only in the high pressure area (rider supporting portion) with an urethane stuffing material, preferably by bonding the seat skin with said urethane stuffing material using a double side adhesive tape formed in the shape of the rider supporting portion.

According to yet another preferred embodiment of the present invention a central seat skin portion, comprising the portion corresponding to a high pressure area in a seating pressure distribution has an increased thickness compared to side seat skin portions extending alongside said central seat skin portion.

A seat of the constitution according to the present invention permits a rider to sit on it with a firm feeling because the portion of the seat where the less sensitive ischia rests is made hard with a comfortable feeling because the portion of the seat where the sensitive thighs and coccyx rests is made soft.

The embodiment where a central skin portion of increased thickness compared to the side seat skin portions extending alongside said central seat skin portion is provided is particularly useful for off road type motorcycles.

In the following the present invention is explained in greater detail by means of several embodiments thereof in conjunction with the accompanying drawings wherein:
FIG. 1 is a schematic side view of a motorcycle provided with the seat of the present invention,
FIG. 2 shows a longitudinal cross section of a bottom plate of a tandem seat as an embodiment of the present invention,
FIG. 3 shows a lateral cross section taken along the line A-A in FIG. 2 of an embodiment of a motorcycle seat according to the present invention,
FIG. 4 is a plan view of the seat shown in FIG. 3 showing the area where the seat hardness is increased,
FIG. 5 is a plan view of a different shape of the portion of the seat where the seat hardness is increased,
FIG. 6 is a three-dimensional diagram of seating pressure produced by a rider on a seat,
FIG. 7 shows a partially enlarged cross section of a seat of the first embodiment shown in FIG. 3 having a structure to increase the seat hardness,
FIG. 8 shows a partially enlarged cross section of the second embodiment having a different structure for increasing the seat hardness,
FIG. 9 shows a partially enlarged cross section of the third embodiment having a different structure for increasing the seat hardness,
FIG. 10 shows a partially enlarged cross section of the fourth embodiment having a different structure for increasing the seat hardness,
FIG. 11 shows a partially enlarged cross section of the fifth embodiment having a different structure for increasing the seat hardness,
Fig. 12, a motorcycle seat according to yet another embodiment of the present invention, and
Fig. 13 a partial cross section along line B-B of figure 12.

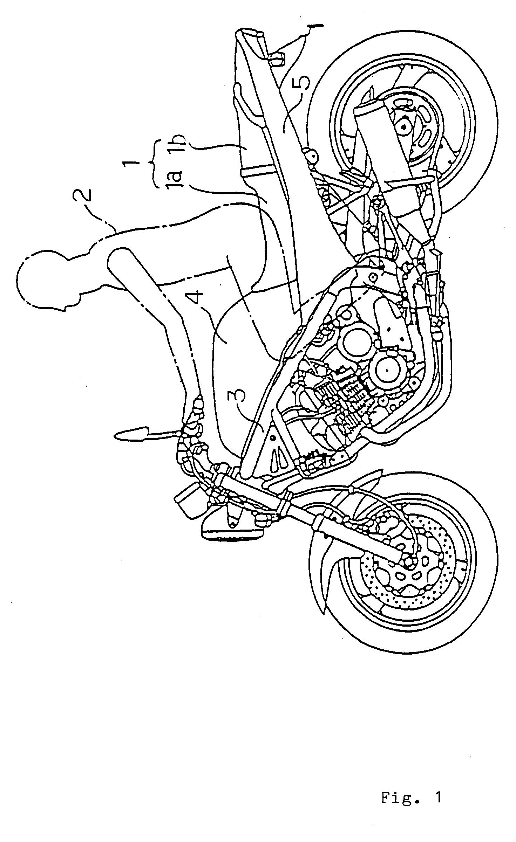

FIG. 1 is a schematic view of a motorcycle provided with a seat according to the invention. A seat 1 is of a tandem type comprising a front seat portion 1a for a rider and a rear seat portion for a co-rider, with both portions made continuous to form a stepped shape. The seat 1 is located behind a fuel tank 4 above a main frame 3 and secured on a pair of seat frames (not shown) extending from a rear middle point on the main frame 3. Both sides of the portion of the seat frame below the seat 1 are covered with seat cowls 5.

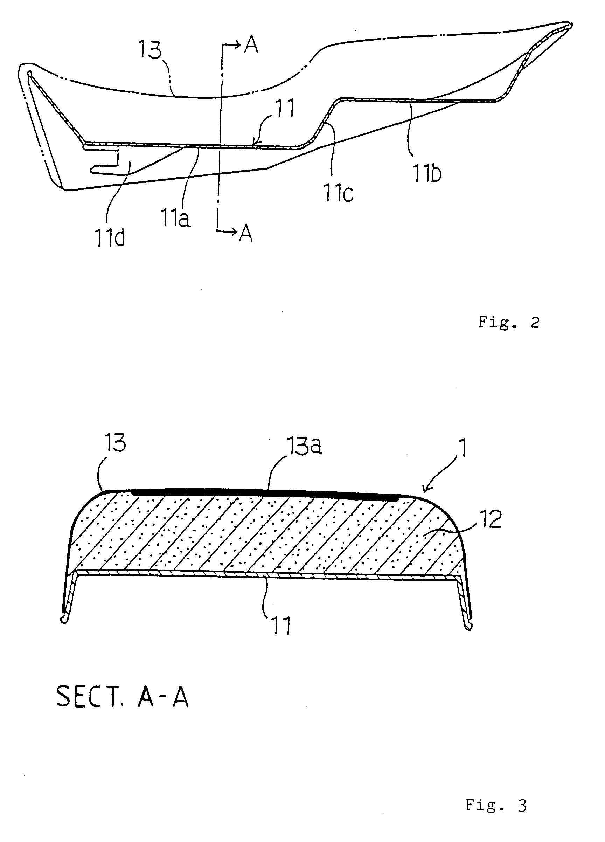

FIG. 2 shows a longitudinal cross section of a bottom plate 11 constituting the bottom portion of the seat 1. The bottom plate 11 comprises a planar member made of metal, hard plastic or the like, and is formed in an integral, stepped shape with bottom plates 11a and 11b respectively for a front seating portion 1a and a rear seating portion 1b connected through a step portion 11c. An engagement portion 11d is integrally formed on the underside of the front portion 11a of the bottom plate 11 for engagement with a seat securing portion (not shown) of a vehicle body.

FIG. 3 shows a lateral cross section of the seat 1 having the bottom plate 11 as described above. A cushion stuffing member 12 is placed on the bottom plate 11 and covered with a seat skin 13 with its periphery secured to the periphery of the bottom plate 11. The cushion stuffing member 12 is made of urethane foam, and the seat skin 13 is made of a surface skin of synthetic leather made up of PVC (polyvinyl chloride) surface skin and a backing sheet made of wooly nylon.

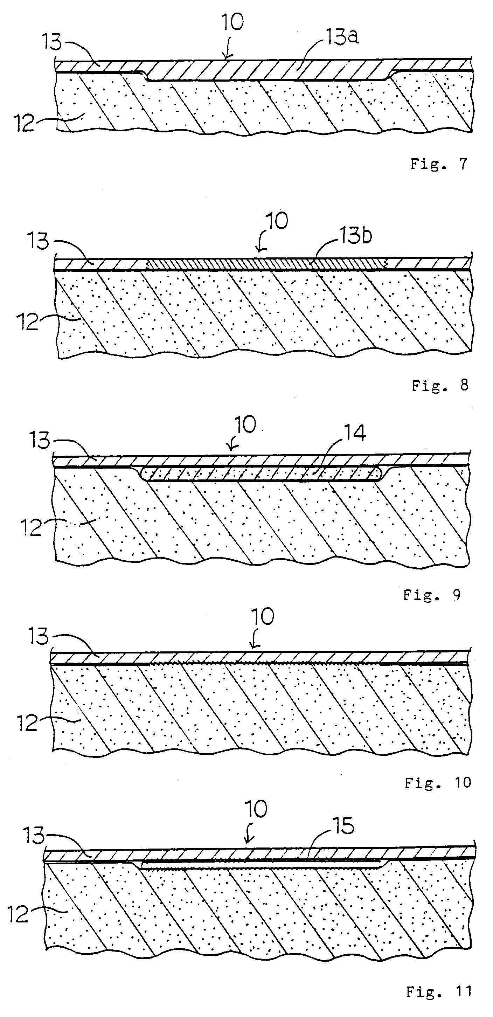

In an embodiment of the seat 1 constituted as described above, as shown in FIGs. 3 and 7, a portion 13a of the seat skin 13 covering the surface of the cushion member 12 is formed thicker than other portions.

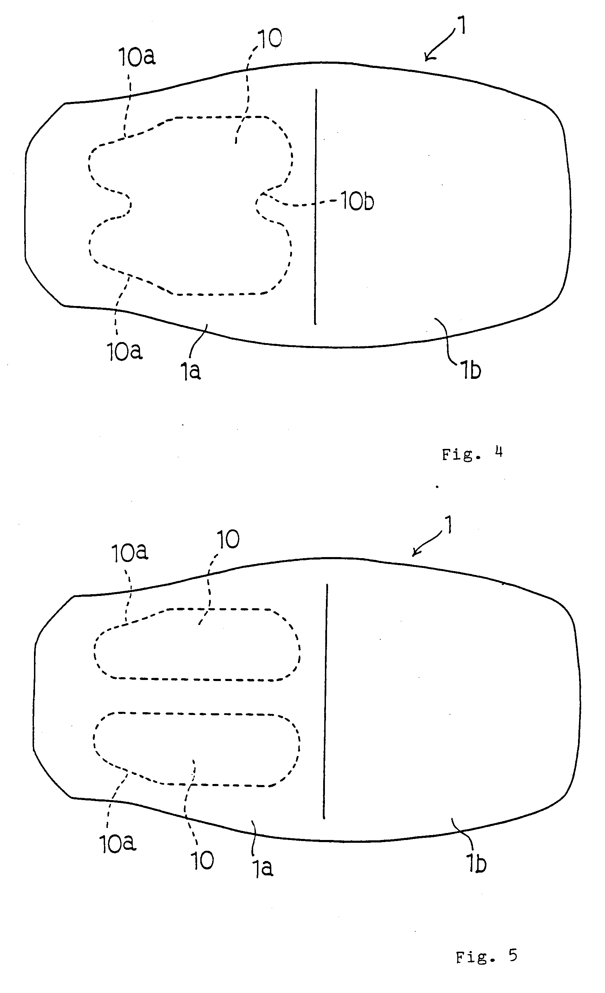

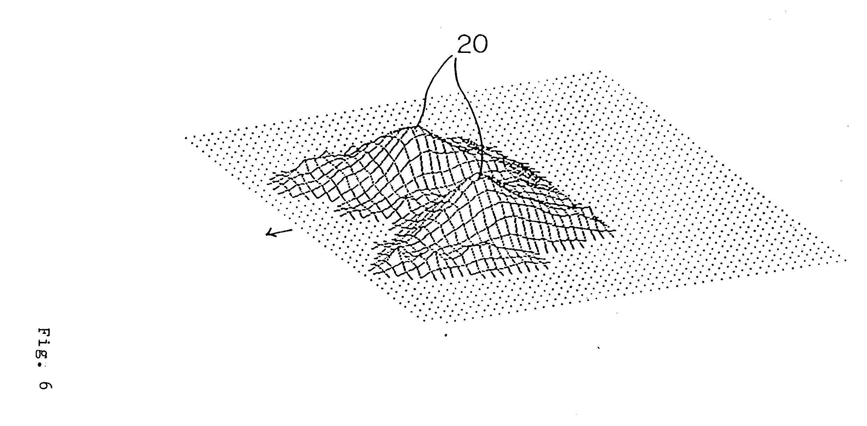

As shown in Fig. 4, a rider supporting portion 10 which has a higher rigidity than other portions and, therefore is harder than said other portions is formed with the thickened portion 13a. The harder rider supporting portion 10 is located to correspond to high pressure portions 20 in a seating pressure distribution diagram shown in Fig. 6 (the arrow showing the forward direction vehicle) when the rider sits on the seat.

The harder rider supporting portion 10 of increased rigidity is formed in a longitudinally elongate shape relative to the seating pressure distribution so as to accommodate forward and rearward shifts in the riding position of the rider (handling person) 2 during driving, with recesses 10a and 10b for thighs and coccyx respectively.

The seat 1 of this embodiment as described above is favorable for the rider 2 to firmly seat and take appropriate riding attitude because the portion 10 of the seat 1 corresponding to the less sensitive ischia is made harder than other portions by means of the thicker portion 13a of the seat skin 13, and at the same time provides comfortable seated feeling for the rider 2 because the portions of the seat 1 corresponding to sensitive thighs and coccyx are made relatively soft.

If thick or hard (less elastic) seat skin is used over the entire seat surface for increasing the hardness of the portion of the seat corresponding to the ischia, the seat skin tends to produce wrinkles when it is stretched over the seat and it becomes difficult to provide fine finish appearance. According to the seat 1 of this embodiment, however, the seat skin 13 can be stretched over the seat with fine finish appearance without wrinkles because only the portion 13a of the seat skin 13 is made thicker than other portions which are thin and more elastic.

The motorcycle seat of this invention is not limited to the specific structure of the above embodiment, and the plan view shape of the harder portion 10 and the structure for attaining the harder portion 10 may be appropriately selected as described below.

In other words, the plan view shape of the harder rider supporting portion 10 may be not only continuous from right to left as shown in FIG. 4 but also with separated right and left portions as shown in FIG. 5 which provides further comfortable seated feeling due to soft pressure not only to the thighs and coccyx but also to genitals.

As for specific structures for forming the harder portion 10 of the seat 1, in addition to the structure in which the thickness of the portion 13a of the seat skin 13 is changed as shown in FIG. 7, other structures are also possible in which part of the seat skin 13 is made of a different, less elastic material 13b, or both material and thickness are changed to make the portion of the seat skin corresponding to the high seating pressure area harder and less elastic, while making other portions thinner and more elastic.

While partially changing the material of the seat skin 13 is done by welding or sewing, such processes can be utilized to provide changes in appearance design of the seat 1.

It is also possible, as shown in FIG. 9, to insert an impact absorbing member 14 made of rubber or urethane under the seat skin 13 to make part of the seating surface hard. This attenuates vibration transmitted from the road surface effectively.

When the impact absorbing member 14 is to be inserted under the seat skin 13, the impact absorbing member 14 may be bonded in advance under the seat skin 13 to improve productivity.

It is also possible, as shown in FIG. 10, to partially bond the seat skin 13 and the stuffing material 12 so that the portion of the seat 1 corresponding to ischia is made hard and the portions corresponding to thighs and coccyx are left soft as they are.

Conventionally, bonding of the seat skin and the stuffing member has been done for the entire seat surface. In that case, while the seated feeling is improved by increased seat hardness in the portion corresponding to the ischia, the seated feeling is impaired in the portions corresponding to sensitive thighs and coccyx. If stuffing density is lowered to compensate this, the seat tends to yield easily.

In the embodiment shown in FIG. 10 on the other hand, since only the necessary portion around the area corresponding to the ischia is bonded, the stuffing density of urethane need not be lowered substantially and the seat is prevented from yielding due to decreased stuffing density.

Furthermore as shown in FIG. 11, it is also possible to make hard the portion of seat corressponding to the area around the ischia by bonding the seat shin and the urethane stuffing material 12 using a double sided adhesive sheet 15 of a shape of the area where the seating pressure is high, while leaving the other portions corresponding to the thighs and coccyx soft as they are. Such efficient bonding of the seat skin 13 and the urethane stuffing member 12 improves production efficiency and eliminates the necessity for adhesive drying time because no organic solvent is used and workplace environment is improved.

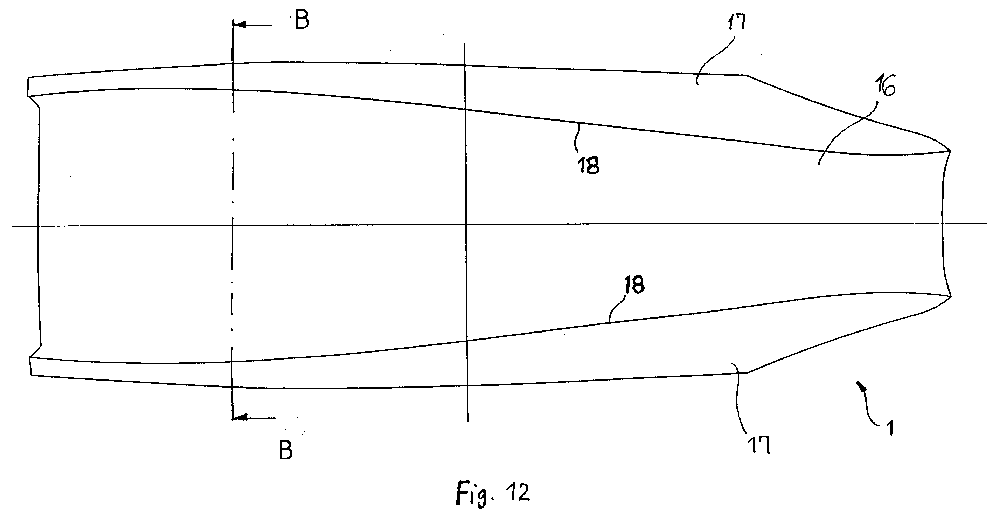

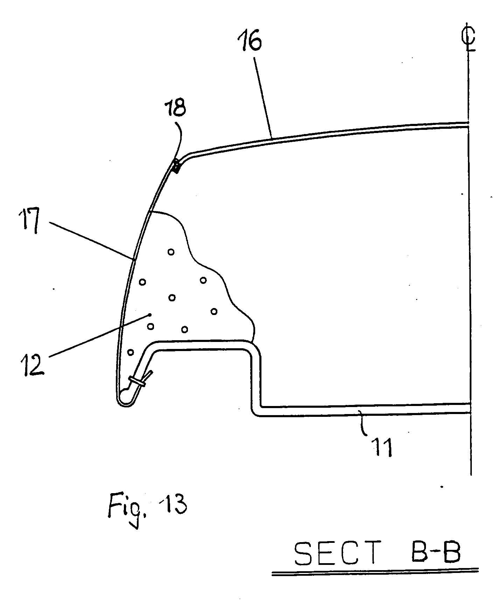

Another embodiment of the present invention is moreover shown in plan view and a partial cross section in figures 12 and 13. Therein, the motorcycle seat 1 comprises a central seat skin portion 16, a part of which (not specifically shown) forming the rider supporting portion or hard portion 10, said central seat skin portion 16 having an increased thickness compared to side seat skin portions 17, which extend alongside said central seat skin portion 16. Accordingly, the main seat surface 16 at the top of the seat has an increased thickness compared to the seat skin portion 17 alongside said central seat skin portion 16, both portions 16, 17 being welded to each other along a welding line 18. The metallic base portion 11 supports to the cushion stuffing member, specifically urethane stuffing member 12.

The present invention related to motorcycle seats is not limited to the specific structures of the embodiments described above. To make the seat partially more rigid (hard), the structures of the above embodiments may be suitably combined. The present invention may be applied not only to the seat of the tandem type but also to motorcycle seats in general.

According to the present invention related to motorcycle seats, the seat can be made hard in the portion corresponding to the ischia of the rider where the seating pressure is high, and soft in the portions corresponding to the thighs and coccyx. This improves seated feeling, prevents the seat from yielding, and makes it possible to apply the seat skin beautifully over the seat.

In the meaning of the present application the expression "higher rigidity" designating a hard portion or rider supporting portion 10 is meant in comparison to other portions of the seat cushion defined by the cushion stuffing member 12 and the seat skin 13 and including potential inserts, such as the impact absorbing member 14.

## Claims

1. Motorcycle seat comprising:
a bottom plate (11),
a cushion stuffing member (12) placed on the bottom plate (11), and
a seat skin (13) covering said cushion member (12),
**characterized in that**
the seat comprises means for increasing the structural rigidity of portions (10,13a) of the seat skin (13) which portions (10,13a) correspond to high pressure areas (20) in a seating pressure distribution when a rider sits on the seat.

2. Motorcycle seat as claimed in claim 1, **characterized in that** said means for increasing the structural rigidity of portions (10,13a) of the seat skin (13) are adapted to be harder than other areas of the seat skin (13).

3. Motorcycle seat as claimed in claim 1 or 2, **characterized in that** means for increasing structural rigidity are provided by increasing a thickness of a portion (10,13a) at the seat skin (13) compared to other areas of the seat skin (13).

4. Motorcycle seat as claimed in claim 1 or 2, **characterized in that** said means for increasing rigidity are provided by using a harder material for portions (10,13a) of the seat skin (13) than for other areas of the seat skin (13).

5. Motorcycle seat as claimed in claim 1 or 2, **characterized in that** said means for increasing rigidity are formed by an impact absorbing member (14) inserted under the seat skin (13).

6. Motorcycle seat as claimed in one of claims 1 to 5, **characterized in that** said cushion stuffing member is an urethane stuffing member (12).

7. Motorcycle seat as claimed in claim 1 or 6, **characterized in that** said means for increasing rigidity is provided by a welded portion of said cushion stuffing member (12) and a portion (10,13a) of the seat skin (13).

8. Motorcycle seat as claimed in one of claims 1,2 or 6, **characterized in that** said means for increasing rigidity is provided by a double-sided adhesive sheet (15) of the shape of the portion (10,13a) corresponding to high pressure areas in a seating pressure distribution to bond the seat skin (13) and the cushion stuffing member (12).

9. Motorcycle seat as claimed in at least one of the preceding claims 1 to 8, **characterized in that** a central seat skin portion (16) comprising the portion (10,13a) corresponding to high pressure areas of a seating pressure distribution has a higher thickness than side seat skin portions (17) extending alongside said central seat skin portion (16).

## Patentansprüche

1. Kraftradsitz mit:
einer Bodenplatte (11),
einem auf die Bodenplatte (11) aufgesetzten Polsterungsteil (12) und
einem das Polsterungsteil (12) bedeckenden Sitzbezug (13),
**dadurch gekennzeichnet, daß**
der Sitz Mittel zum Erhöhen der strukturellen Steifigkeit von Abschnitten (10,13a) des Sitzbezugs (13) umfaßt, wobei die Abschnitte (10,13a) Flächen (20) hoher Druckbeaufschlagung in einer Sitzdruckverteilung entsprechen, wenn ein Fahrer auf dem Sitz sitzt.

2. Kraftradsitz nach Anspruch 1, **dadurch gekennzeichnet, daß** die Mittel zum Erhöhen der strukturellen Steifigkeit von Abschnitten (10, 13a) des Sitzbezugs (13) ausgelegt sind, härter als andere Bereiche des Sitzbezugs (13) zu sein.

3. Kraftradsitz nach Anspruch 1 oder 2, **dadurch gekennzeichnet, daß** Mittel zum Erhöhen der strukturellen Steifigkeit durch Erhöhen der Dicke eines Abschnittes (10, 13a) des Sitzbezugs (13) gegenüber anderen Bereichen des Sitzbezugs (13) vorgesehen sind.

4. Kraftradsitz nach Anspruch 1 oder 2, **dadurch gekennzeichnet, daß** die Mittel zum Erhöhen der Steifigkeit durch Benutzung eines härteren Materials für Abschnitte (10, 13) des Sitzbezugs (13) als für andere Bereiche des Sitzbezugs (13) vorgesehen sind.

5. Kraftradsitz nach Anspruch 1 oder 2, **dadurch gekennzeichnet, daß** die Mittel zum Erhöhen der Steifigkeit durch unter den Sitzbezug (13) eingesetzte Stoßabsorptionsteile (14) gebildet sind.

6. Kraftradsitz nach einem der Ansprüche 1 bis 5, **dadurch gekennzeichnet, daß** das Polsterungsteil ein Urethan-Polsterungsteil (12) ist.

7. Kraftradsitz nach Anspruch 1 oder 6, **dadurch gekennzeichnet, daß** das Mittel zum Erhöhen der Steifigkeit durch einen mit einem Abschnitt (10, 13a) des Sitzbezugs (13) verschweißten Abschnitt des Polsterungsteils (12) vorgesehen ist.

8. Kraftradsitz nach einem der Ansprüche 1, 2 oder 6, **dadurch gekennzeichnet, daß** das Mittel zum Erhöhen der Steifigkeit durch eine doppelseitige Kleberschicht (15) mit der Form des den Hochdruckbereichen entsprechenden Abschnittes (10, 13) in einer Sitzdruckverteilung geschaffen ist, um den Sitzbezug (13) mit dem Polsterungsteil (12) zu verbinden.

9. Kraftradsitz nach mindestens einem der vorangehenden Ansprüche 1 bis 8, **dadurch gekennzeichnet, daß** ein zentraler Sitzbezugsabschnitt (16), der die Hochdruckbereichen einer Sitzdruckverteilung entsprechenden Abschnitte (10, 13a) umfaßt, eine höhere Dicke als seitliche Sitzbezugsabschnitte (17) besitzt, die sich längs des zentralen Sitzbezugsabschnittes (16) erstrecken.

## Revendications

1. Selle de motocyclette comprenant :
une plaque d'embase (11),
un élément de garnissage de coussin (12) placé sur la plaque d'embase (11), et
un revêtement de selle (13) recouvrant ledit élément de coussin (12),
caractérisée en ce que
la selle comprend des moyens destinés à augmenter la rigidité de structure de parties (10, 13a) du revêtement de selle (13), lesquelles parties (10, 13a) correspondent à des zones de pression élevée (20) dans une répartition de pression d'assise lorsque le conducteur s'assied sur la selle.

2. Selle de motocyclette selon la revendication 1, caractérisée en ce que lesdits moyens destinés à augmenter la rigidité de structure de parties (10, 13a) du revêtement de selle (13) sont adaptés pour être plus durs que d'autres zones du revêtement de selle (13).

3. Selle de motocyclette selon la revendication 1 ou la revendication 2, caractérisée en ce que des moyens destinés à augmenter la rigidité de structure sont fournis par une augmentation de l'épaisseur d'une partie (10, 13a) sur le revêtement de selle (13) en comparaison avec d'autres zones du revêtement de selle (13).

4. Selle de motocyclette selon la revendication 1 ou la revendication 2, caractérisée en ce que lesdits moyens destinés à augmenter la rigidité sont fournis par une utilisation d'un matériau plus dur pour des parties (10, 13a) du revêtement de selle (13) que pour d'autres zones du revêtement de selle (13).

5. Selle de motocyclette selon la revendication 1 ou la revendication 2, caractérisée en ce que lesdits moyens destinés à augmenter la rigidité sont formés par un élément amortisseur de choc (14) introduit sous le revêtement de selle (13).

6. Selle de motocyclette selon l'une des revendications 1 à 5, caractérisée en ce que ledit élément de garnissage de coussin est un élément de garnissage en uréthane (12).

7. Selle de motocyclette selon la revendication 1 ou la revendication 6, caractérisée en ce que lesdits moyens destinés à augmenter la rigidité sont fournis par une partie soudée dudit élément de garnissage de coussin (12) et par une partie (10, 13a) du revêtement de selle (13).

8. Selle de motocyclette selon l'une des revendications 1, 2 ou 6, caractérisée en ce que lesdits moyens destinés à augmenter la rigidité sont fournis par une feuille adhésive double face (15) ayant la forme de la partie (10, 13a) correspondant à des zones de pression élevée dans la répartition de pression d'assise afin de coller le revêtement de selle (13) et l'élément de garnissage de coussin (12).

9. Selle de motocyclette selon au moins l'une des revendications précédentes 1 à 8, caractérisée en ce qu'une partie centrale de revêtement de selle (16) comprenant la partie (10, 13a) correspondant à des zones de pression élevée d'une répartition de pression d'assise a une épaisseur plus élevée que des parties latérales de revêtement de selle (17) qui s'étendent sur les côtés de ladite partie centrale de revêtement de selle (16).
